# EUROPÄISCHE PATENTSCHRIFT

(11) **EP 2 585 357 B1**
(45) Veröffentlichungstag und Bekanntmachung des Hinweises auf die Patenterteilung: **15.07.2015**
(21) Anmeldenummer: 11726700.5
(22) Anmeldetag: 25.05.2011
(51) Int. Cl.: B62D 5/04, B62D 5/12

(54) **ROTATORISCH ABGESTÜTZTE LENKSPINDEL**
ROTATIONALLY SUPPORTED STEERING SPINDLE
ARBRE DE DIRECTION SOUTENU EN ROTATION

(30) Priorität: 23.06.2010 DE 102010024847
(43) Veröffentlichungstag der Anmeldung: 01.05.2013
(73) Patentinhaber: ThyssenKrupp Presta AG, 9492 Eschen (LI)
(72) Erfinder: ROMBOLD, Manfred, 71364 Winnenden (DE)
(74) Vertreter: Lenzing Gerber Stute
(86) Internationale Anmeldenummer: PCT/EP2011/002597
(87) Internationale Veröffentlichungsnummer: WO 2011/160752

(56) Entgegenhaltungen:
- WO-A1-2008/128264
- DE-A1- 10 047 438
- DE-A1-102004 020 075
- DE-A1-102005 035 633

## Beschreibung

Die vorliegende Erfindung betrifft einen Aktuator für eine Kraftfahrzeuglenkung mit den Merkmalen des Oberbegriffs des Anspruchs 1.

Bei Kraftfahrzeuglenkungen von der allgemeinen Bauart einer Zahnstangenlenkung ist eine Zahnstange oder Lenkspindel längsverschieblich in einem Lenkungsgehäuse gelagert. Die Verlagerung in Längsrichtung bewirkt über mit der Zahnstange verbundene Spurstangen und Achsschenkel eine Verschwenkung der gelenkten Räder des Kraftfahrzeugs. Die Zahnstange wird üblicherweise von einer Lenkwelle über einen Verzahnungseingriff angetrieben. Der Verzahnungseingriff, bei dem ein Lenkritzel mit einem Zahnsegment der Zahnstange kämmt, verhindert gleichzeitig auch eine Verdrehung der Zahnstange um ihre Längsachse. Das Ritzel stützt die Zahnstange also gegenüber einer Rotationsbewegung ab.

Drehmomente, die die Rotationsbewegung der Zahnstange bewirken können, werden einerseits über die Spurstangen in die Zahnstange eingeleitet. Andererseits gibt es elektromechanisch angetriebene oder unterstützte Zahnstangenlenkungen, bei denen ein Getriebe zur Umsetzung einer rotatorischen Antriebsbewegung in eine Linearbewegung der Zahnstange vorgesehen ist. Beispielsweise kann das Getriebe einen Kugelumlauf aufweisen, der die Zahnstange koaxial umgibt und mit einem Kugelgewinde auf der Zahnstange zusammenwirkt. Der Kugelumlauf wird über einen Hohlwellenmotor oder über einen seitlich neben dem Kugelumlauf angeordneten Elektromotor und ein Getriebe angetrieben. Eine Drehung des Kugelumlaufs bewirkt eine Längsverschiebung der Zahnstange oder Lenkspindel. Das damit einhergehende Drehmoment wird wie oben beschrieben abgestützt.

Aus verschiedenen Gründen ist man für bestimmte Anwendungen bestrebt, die Lenkwelle, also die im Wesentlichen drehstarre Verbindung zwischen einem Lenkrad und einem Lenkritzel, zu vermeiden. Dies kann aus Gründen der Unfallsicherheit vorteilhaft sein, aber auch zur Vermeidung von Körperschallübertragung zwischen der Vorderachse und dem Innenraum des Kraftfahrzeugs. Für solche Fälle werden Lenkgetriebe entwickelt, bei denen eine mechanische Kopplung zwischen dem Lenkrad und dem Lenkgetriebe beispielsweise über Seilzüge oder über hydraulische Geber- und Nehmeraggregate vorgesehen sind. Solche Lenkungen können mit oder ohne Servounterstützung ausgeführt werden. Aus den Offenlegungsschriften DE 10 2004 020075 A1 und DE 10 2005 035 633 A1 sind beispielsweise Servounterstützungen mit einem hydraulischen Arbeitszylinder bekannt. Es sind auch Steer-by-wire-Lenkungen bekannt, die eine reine elektrische Kopplung zwischen dem Lenkrad und dem Lenkgetriebe vorsehen.

Wenn die übliche Drehmomentabstützung im Bereich des Ritzels wegfällt, ist es erforderlich, das durch Fahrbahnrückwirkungen oder auch durch einen Servoantrieb entstehende Drehmoment anderweitig abzustützen. Dies gilt insbesondere bei elektrisch unterstützten Lenkungen mit dem erwähnten Kugelumlauf oder einem anderen rotatorischen Getriebe.

Hierzu ist es Aufgabe der vorliegenden Erfindung, eine Abstützung der Lenkspindel bei einem Lenkaktuator mit einem hydraulischen Arbeitszylinder zu schaffen, die eine besonders kompakte Bauweise ermöglicht. Diese Aufgabe wird von einem Lenkaktuator mit den Merkmalen des Anspruchs 1 gelöst.

Weil der Lenkaktuator über einen nicht kreisrunden, insbesondere unrunden Hydraulikkolben verfügt, kann sich die Lenkspindel über den Kolben an dem ebenfalls nicht kreisrunden Lenkungsgehäuse abstützen. Die Rotation bei Auftreten eines Drehmoments um die Längsachse wird dadurch zuverlässig verhindert.

Vorzugsweise ist die Lenkspindel als Getriebeelement Teil eines Getriebes, das eine rotatorische Bewegung eines elektrischen Servomotors in eine Linearbewegung der Lenkspindel umsetzt, wie beispielsweise eines Umlaufrädergestriebes, eines Spindeltriebs oder dergleichen. Vorzugsweise ist insbesondere die Lenkspindel mit einem Kugelgewinde versehen, auf das ein Kugelumlaufgetriebe zum elektromotorischen Antrieb der Lenkspindel greift.

Es ist weiter bevorzugt, den Kolben in Form eines regelmäßigen Vielecks auszubilden. Eine weiter bevorzugte Ausführungsform sieht vor, dass der Kolben an seinem äußeren Umfang mit einer Dichteinlage und einer separaten Gleiteinlage versehen ist, die an der Innenseite des Lenkungsgehäuses anliegen.

Im Zusammenhang dieser Patentanmeldung soll unter "Lenkspindel" ein innerhalb eines Lenkungsgehäuses längsverschieblich gelagertes, stangenartiges Getriebeelement verstanden werden, das in der Funktion einer Zahnstange entspricht, aber nicht notwendigerweise eine entsprechende Verzahnung aufweist. Das Wort "zylindrisch" ist im mathematischen Sinn zu verstehen und bezeichnet eine Form mit zwei kongruenten Grundflächen, die über eine Mantelfläche miteinander verbunden sind. Der Begriff "unrund" bedeutet bei dieser Definition, dass die Grundflächen keine Kreise sind. Nachfolgend wird ein Ausführungsbeispiel der vorliegenden Erfindung anhand der Zeichnung näher beschrieben. Es zeigen:
- Fig. 1:: einen erfindungsgemäßen Lenkaktuator in einem Längsschnitt; sowie
- Fig. 2:: den Aktuator aus Fig. 1 in einem Querschnitt entlang der Linie II-II.

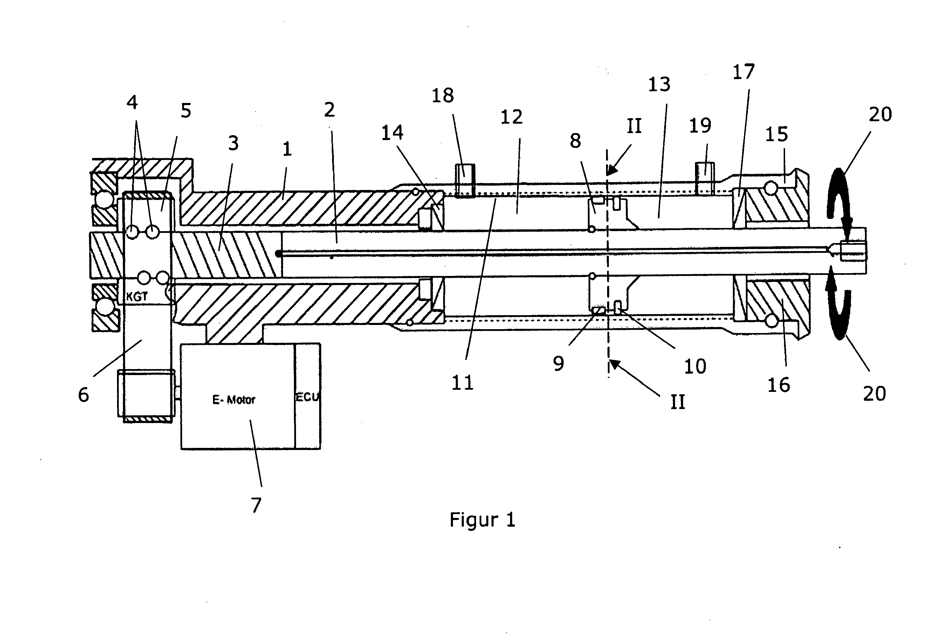

In der Fig. 1 ist in einem Längsschnitt ein Lenkaktuator für ein Kraftfahrzeug dargestellt. Der Lenkaktuator umfasst ein Lenkungsgehäuse 1, in dem eine Lenkspindel 2 längs verschieblich angeordnet ist. Die Lenkspindel 2 ist mit einem Kugelgewinde 3 versehen, das gemeinsam mit Kugeln 4 und einer Kugelmutter 5 einen Kugelgewindetrieb bildet. Der Kugelgewindetrieb wird bei diesem Ausführungsbeispiel über einen Zahnriemen 6 von einem Elektromotor 7 angetrieben. In bekannter Weise bewirkt eine Drehung der Kugelmutter 5 eine geradlinige Verlagerung der Lenkspindel 2 in Längsrichtung.

Die Lenkspindel 2 weist weiter einen Kolben 8 auf. Der Kolben 8 ist mit einer Dichteinlage 9 und einer Gleiteinlage 10 versehen und sitzt etwa konzentrisch auf der Lenkspindel 2. Das Lenkungsgehäuse 1 weist eine zylindrische innere Oberfläche 11 auf, an der der Kolben 8 mit der Dichteinlage 9 und der Gleiteinlage 10 anliegt. Bei einer Längsbewegung der Lenkspindel 2 gleitet der Kolben 8 auf der Oberfläche 11 in Längsrichtung.

Die innere Oberfläche 11 des Lenkungsgehäuses 1 begrenzt einen Innenraum, der von dem Kolben 2 in einen ersten Arbeitsraum 12 und eine zweiten Arbeitsraum 13 unterteilt wird. Gegenüber dem Abschnitt des Lenkungsgehäuses 1, in dem der Kugelgewindetrieb angeordnet ist, ist der erste Arbeitsraum 12 mittels eines Dichtrings 14 hydraulisch abgedichtet. An dem gegenüber liegenden Ende weist das Lenkungsgehäuse 1 ein freies Ende 15 auf, in dem die Lenkspindel 2 in einem Gleitlager 16 abgestützt ist. Der zweite Arbeitsraum 13 ist gegenüber dem Gleitlager 16 in einem Dichtring 17 abgedichtet. Die Lenkspindel 2 bildet so mit dem Kolben 8 und den beiden Arbeitsräumen 12, 13 ein doppelt wirkendes Kolben-Zylinder-Aggregat. Hydraulikanschlüsse 18 und 19 sind zur Verbindung der Arbeitsräume 12 bzw. 13 mit einer an sich bekannten Hydraulik vorgesehen.

Der Lenkaktuator weist kein Lenkritzel auf. Vielmehr ist der Lenkaktuator nach diesem Ausführungsbeispiel für ein Lenksystem vorgesehen, in dem ein Lenkrad über eine kurze Lenksäule mit einem hydraulischen Kolben-Zylinder-Aggregat als Geberaggregat verbunden ist. Das Geberaggregat ist über Hydraulikleitungen mit den Anschlüssen 18 und 19 des Lenkaktuators verbunden. Die beiden Arbeitsräume 12 und 13 sind dann gemeinsam mit dem Kolben 8 als Nehmeraggregat ausgebildet, welches bei einer Drehung des nicht dargestellten Lenkrades eine Verlagerung der Lenkspindel 2 in Längsrichtung bewirkt, und zwar bei einer einfachen Ausführung ohne hydraulische Lenkunterstützung. Ein solches hydraulisches System ist aufgrund des Wegfalls einer Hydraulikpumpe "hydraulisch steif" und kann als solches als ein einfaches Steer-by-wire-System ausgelegt werden, das keine aufwändige Sensorik und keine vollständige Redundanz benötigt.

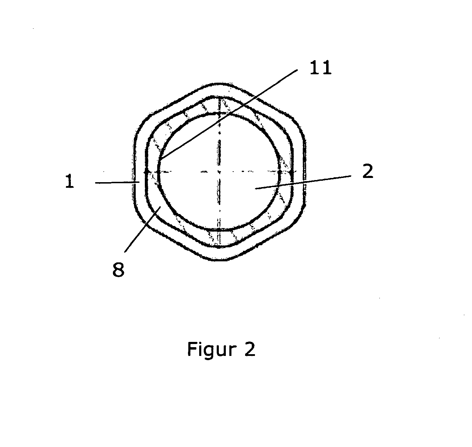

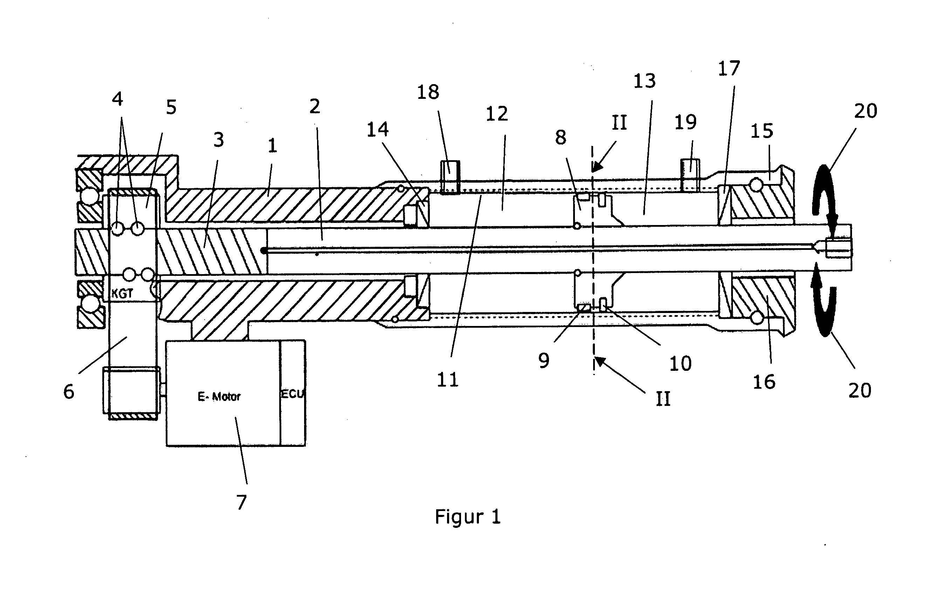

Die Lenkhilfskraft wird erforderlichenfalls von dem Elektromotor 7 über den Kugelgewindetrieb auf die Lenkspindel 2 aufgebracht. Hierbei entstehen Drehmomente um die Längsachse in Richtung der Drehmomentpfeile 20. Um diese Drehmomente abzustützen, ist der Kolben 8 unrund ausgeführt, wie dies in der Fig. 2 dargestellt ist.

Die Fig. 2 zeigt einen Querschnitt entlang der Linie II/II durch den Lenkaktuator aus Fig. 1. Der Kolben 8 ist im Wesentlichen sechseckig mit abgerundeten Ecken ausgeführt und er stützt sich in Umfangsrichtung in dem entsprechend ausgebildeten Lenkungsgehäuse 1 ab, wobei die Dichteinlage 9 und die Gleiteinlage 10 nicht dargestellt sind. Die Lenkspindel 2 ist in bekannter Weise rund und stangenförmig ausgebildet.

Der insoweit schematisch dargestellte und beschriebene Lenkaktuator kann in seiner Längsrichtung besonders kurz ausgeführt werden, weil die Drehmomentabstützung im Bereich des unrunden Kolbens erfolgt. Es sind keine Führungen oder Abstützungen außerhalb des Kugelgewindes 3 oder des hydraulischen Nehmeraggregats erforderlich. Solche Abstützungen würden ansonsten beispielsweise im Bereich der Lagerbuchse 16 vorgesehen sein und dort zusätzlichen Bauraum erfordern. Dies wird mit der dargestellten Lösung vermieden.

Die Abstützung der Lenkspindel gegen Drehmomente mittels des unrunden Hydraulikkolbens kann auch bei anderen ähnlichen Lenkgetrieben vorgesehen sein, die eine rein mechanische Verbindung zwischen der Lenksäule und der Lenkspindel über ein Lenkritzel oder dergleichen aufweisen. Die Ausführung der mechanischen Verbindung kann dann einfacher und damit leichter und preiswerter gestaltet werden, weil diese Baugruppe nicht zusätzlich zur Kraftübertragung auch noch das Drehmoment abstützen muss.

Bevorzugte Formen des Hydraulikkolbens sind im technischen Sinne unrund. Als unrund bezeichnet man in der Technik geometrische Formen und Querschnitte, die vom Kreis oder einer kreisförmigen Bewegung periodisch abweichen. Insbesondere kann der Kolben die Form eines so genannten Gleichdicks aufweisen.

### Bezugszeichen

- 1.: Lenkungsgehäuse
- 2.: Lenkspindel
- 3.: Kugelgewinde
- 4.: Kugeln
- 5.: Kugelmutter
- 6.: Zahnriemen
- 7.: Elektromotor
- 8.: Kolben
- 9.: Dichteinlage
- 10.: Gleiteinlage
- 11.: Zylindrische innere Oberfläche
- 12.: Arbeitsraum
- 13.: Arbeitsraum
- 14.: Dichtring
- 15.: Freies Ende
- 16.: Gleitlager
- 17.: Dichtring
- 18.: Hydraulikanschluss
- 19.: Hydraulikanschluss
- 20.: Drehmomentpfeile

## Patentansprüche

1. Lenkaktuator für ein Kraftfahrzeug, mit einer in einem Lenkungsgehäuse (1) in einer Längsrichtung verschieblich gelagerten Lenkspindel (2), die drehfest und unverschieblich einen Kolben (8) trägt, der in einem als Zylinder ausgebildeten Abschnitt des Lenkungsgehäuses (1) mit der Lenkspindel (2) verschiebbar angeordnet ist und der gemeinsam mit dem Lenkungsgehäuse (1) wenigstens einen hydraulischen Arbeitsraum (12, 13) begrenzt, **dadurch gekennzeichnet, dass** der Kolben (8) und der Zylinder in einer senkrecht zu der Längsrichtung ausgerichteten Ebene nicht kreisrund ausgebildet sind.

2. Lenkaktuator nach Anspruch 1, **dadurch gekennzeichnet, dass** der Kolben (8) und der Zylinder in einer senkrecht zu der Längsrichtung ausgerichteten Ebene unrund ausgebildet sind.

3. Lenkaktuator nach einem der vorhergehenden Ansprüche, **dadurch gekennzeichnet, dass** die Lenkspindel (2) als Getriebeelement Teil eines Getriebes ist, das eine rotatorische Bewegung eines elektrischen Servomotors in eine Linearbewegung der Lenkspindel (2) umsetzt.

4. Lenkaktuator nach einem der vorhergehenden Ansprüche, **dadurch gekennzeichnet, dass** das Getriebe einen Kugelgewindetrieb aufweist, der die Lenkspindel (2) koaxial umgibt und mit einem auf der Lenkspindel (2) angeordneten Kugelgewinde (3) zusammenwirkt.

5. Lenkaktuator nach einem der vorhergehenden Ansprüche, **dadurch gekennzeichnet, dass** der Kolben (8) und der Zylinder senkrecht zu der Längsrichtung einen vieleckigen Querschnitt mit abgerundeten Ecken aufweisen.

6. Lenkaktuator nach einem der vorhergehenden Ansprüche, **dadurch gekennzeichnet, dass** der Kolben (8) in Form eines regelmäßigen Vielecks ausgebildet ist.

7. Lenkaktuator nach einem der vorhergehenden Ansprüche, **dadurch gekennzeichnet, dass** der Kolben (8) an seinem äußeren Umfang mit einer Dichteinlage (9) und einer separaten und in Längsrichtung von der Dichteinlage (9) beabstandeten Gleiteinlage (10) versehen ist, die an der Innenseite (11) des Lenkungsgehäuses (1) anliegen

## Claims

1. A steering actuator for a motor vehicle, having a steering shaft (2), which is mounted such that it can be displaced in a longitudinal direction in a steering housing (1) and bears a piston (8) in a rotationally and displaceably fixed manner, which piston is arranged such that it can be displaced with the steering shaft (2) in a section of the steering housing (1) formed as a cylinder and delimits at least one hydraulic working space (12, 13) together with the steering housing (1),
**characterised in that**
the piston (8) and the cylinder are not circular in a plane aligned perpendicularly to the longitudinal direction.

2. The steering actuator according to Claim 1,
**characterised in that**
the piston (8) and the cylinder are not round in a plane aligned perpendicularly to the longitudinal direction.

3. The steering actuator according to any one of the preceding claims,
**characterised in that**
the steering shaft (2) as a gear element is part of a gearing system that converts a rotary movement of an electric servo motor into a linear movement of the steering shaft (2).

4. The steering actuator according to any one of the preceding claims,
**characterised in that**
the gearing system has a ball screw, which coaxially surrounds the steering shaft (2) and interacts with a ball thread (3) arranged on the steering shaft (2).

5. The steering actuator according to any one of the preceding claims,
**characterised in that**
the piston (8) and the cylinder have a polygonal cross section with rounded corners perpendicularly to the longitudinal direction.

6. The steering actuator according to any one of the preceding claims,
**characterised in that**
the piston (8) is in the form of a regular polygon.

7. The steering actuator according to any one of the preceding claims,
**characterised in that**
the piston (8) is provided on its outer circumference with a sealing insert (9) and a separate sliding insert (10), which is spaced apart from the sealing insert (9) in the longitudinal direction, which inserts bear against the inner side (11) of the steering housing (1).

## Revendications

1. Actionneur de direction pour un véhicule automobile, comportant une colonne de direction (2) positionnée de manière déplaçable dans une direction longitudinale dans un logement de direction (1), qui supporte de manière solidaire en rotation et indéplaçable un piston (8), qui est disposé de manière déplaçable dans une portion réalisée comme un cylindre du logement de direction (1) et qui délimite conjointement au logement de direction (1) au moins un espace de travail hydraulique (12,13), **caractérisé en ce que** le piston (8) et le cylindre sont réalisés de manière non circulaire dans un plan aligné perpendiculairement à la direction longitudinale.

2. Actionneur de direction selon la revendication 1, **caractérisé en ce que** le piston (8) et le cylindre sont réalisés de manière non circulaire dans un plan aligné perpendiculairement à la direction longitudinale.

3. Actionneur de direction selon une des revendications précédentes, **caractérisé en ce que** la colonne de direction (2) comme élément de transmission est une partie d'une transmission, qui convertit un mouvement de rotation d'un servomoteur électrique en un mouvement linéaire de la colonne de direction (2).

4. Actionneur de direction selon une des revendications précédentes, **caractérisé en ce que** la transmission présente un train de vis à billes, qui entoure coaxialement la colonne de direction (2) et coopère avec une vis à billes (3) disposée sur la colonne de direction (2).

5. Actionneur de direction selon une des revendications précédentes, **caractérisé en ce que** le piston (8) et le cylindre présentent perpendiculairement à la direction longitudinale une section transversale polygonale avec des coins arrondis.

6. Actionneur de direction selon une des revendications précédentes, **caractérisé en ce que** le piston (8) est conçu en forme d'un polygone régulier.

7. Actionneur de direction selon une des revendications précédentes, **caractérisé en ce que** le piston (8) ets pourvu sur sa périphérie extérieure d'un insert d'étanchéité (9) et d'un insert coulissant (10) séparé et espacé de l'insert d'étanchéité (9) dans la direction longitudinale, qui vient reposer sur le côté intérieur (11) du logement de direction (1).
